# DEMANDE DE BREVET EUROPEEN

(11) **EP 1 672 249 A1**
(43) Date de publication de la demande: **21.06.2006**
(21) Numéro de dépôt: 05300988.2
(22) Date de dépôt: 01.12.2005
(51) Int. Cl.: F16H 48/06

(54) **Système d'arrêt d'axe de satellite dans un différentiel**

(30) Priorité: 14.12.2004 FR 0452974
(71) Demandeur: Renault, 92109 Boulogne Billancourt (FR)
(72) Inventeur: Levant, Sébastien, F-92500 Rueil Malmaison (FR)
(74) Mandataire: Rougemont, Bernard

(57) **Abrégé**

Différentiel de transmission notamment pour automobile comportant une couronne d'entrée de mouvement, solidaire en rotation d'un boîtier de différentiel (4), fermé par un couvercle, et à l'intérieur duquel deux satellites opposés sont montés en rotation sur un même axe (5) transversal reçu dans deux perçages opposés du carter (7) caractérisé en ce que l'axe est immobilisé axialement vis-à-vis du carter (7) par un élément d'arrêt (1), engagé dans un évidement (9) du boîtier et dans une gorge (8) de l'axe (5) faisant face audit orifice.

## Description

La présente invention concerne un différentiel pour véhicule automobile.

L'invention concerne plus particulièrement un différentiel de véhicule automobile, du type qui comporte un boîtier de différentiel pouvant être entraîné par une couronne solidaire de ce boîtier, des satellites montés en rotation dans le boîtier par des axes traversant celui-ci en étant immobilisés en translation relativement au boîtier, et deux planétaires montés en rotation en engrènement avec les satellites.

Diverses solutions ont été proposées jusqu'à maintenant pour bloquer en translation les axes des satellites dans le boîtier.

L'une de ces solutions prévoit l'utilisation d'un jonc logé dans une gorge de réception réalisée dans chaque perçage du corps du boîtier à travers lequel est introduit l'axe correspondant de satellite. Cette solution nécessite non seulement l'usinage de gorges mais a également pour inconvénient que les gorges fragilisent grandement la tenue du corps du boîtier de différentiel.

Une autre solution consiste à prévoir une vis spécifique d'arrêt de chaque axe de satellite. Cette solution a pour inconvénient majeur d'être volumineuse.

Encore une autre solution prévoit l'utilisation d'une goupille d'arrêt de chaque axe de satellite implantée en partie dans le corps du boîtier de différentiel en faisant saillie dans le perçage de ce corps permettant le passage de l'axe de satellites. Cette solution nécessite l'usinage de perçages pour le passage et l'implantation des goupilles.

On connaît également une solution utilisant des plaquettes rapportées amoviblement fixées au corps du boîtier de différentiel et comportant chacune une languette obturant le perçage correspondant au passage de l'axe de satellite dans le boîtier de différentiel. Cependant, l'utilisation de plaquettes rapportées dépend du système d'assemblage de la couronne d'entraînement du boîtier de différentiel.

Ainsi, les solutions proposées ne fournissent pas un assemblage simple de l'axe et de son système de fixation.

Un but principal de l'invention est de simplifier le montage d'un différentiel en réduisant le nombre de pièces et le nombre d'opérations d'usinage et de montage consacrées au maintien de l'axe des satellites vis-à-vis du boîtier.

A cet effet, l'invention propose que cet axe de satellite soit immobilisé axialement vis-à-vis du carter par un élément d'arrêt, engagé dans un évidement du boîtier et dans une gorge de l'axe faisant face audit orifice.

Selon un mode de réalisation de l'invention, l'élément d'arrêt peut présenter deux parties, une première partie possédant une largeur correspondant sensiblement à l'encombrement transversal de l'évidemment et une seconde partie possédant une largeur correspondant sensiblement à l'encombrement transversal de la gorge.

Selon un autre mode de réalisation, l'élément d'arrêt peut présenter une section longitudinale rectangulaire.

D'autres caractéristiques et avantages de l'invention apparaîtront clairement à la lecture de la description suivante du mode de réalisation non limitatif de celle-ci, en liaison avec les dessins annexés sur lesquels :
- la figure 1 est une coupe suivant l'axe des satellites d'un différentiel de transmission comprenant le système d'arrêt d'axe selon l'invention ;
- la figure 1A est un agrandissement partiel en perspective de la figure 1 ; et
- la figure 2 est une coupe suivant l'axe B de la figure 1.

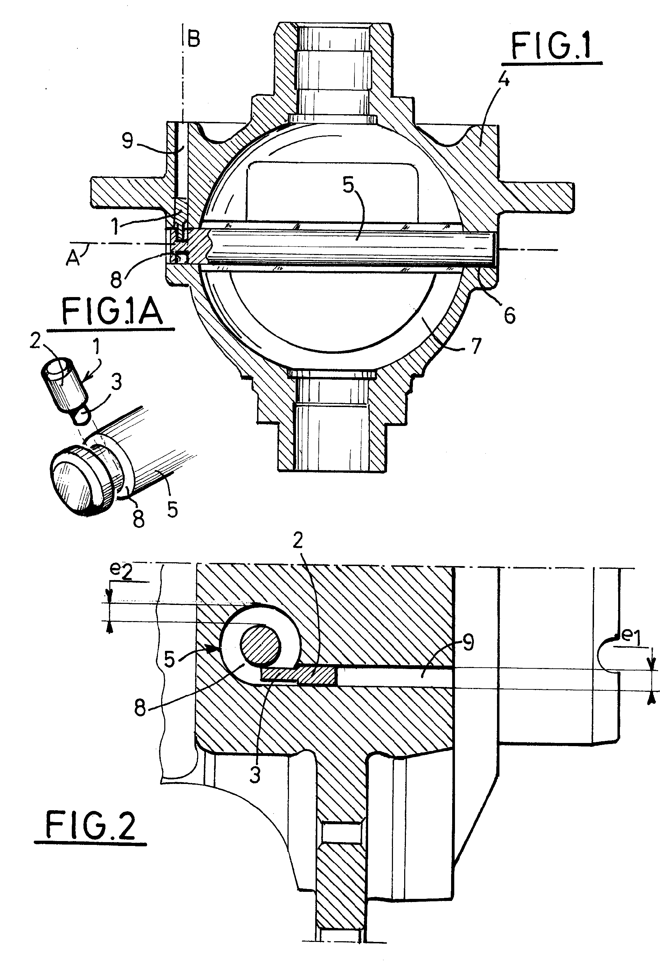

Les figures 1 et 2 telles que représentées présentent un exemple de réalisation dans le cas d'un différentiel sphérique avec un mécanisme conique.

Dans la description qui va suivre, des chiffres de référence identiques désignent des pièces identiques ou ayant des fonctions similaires.

Le différentiel pour véhicule automobile tel que représenté sur la figure 1 comprend un boîtier de différentiel 4 de forme générale tronconique et une couronne d'entraînement (non représentée) du boîtier 4 amoviblement fixée au boîtier. Il comprend, en outre, des satellites (non représenté) montés en rotation dans le boîtier 4 sur un même axe 5 transversal qui est reçu dans deux perçages transversaux alignés traversant les parois opposées 6 du carter 7.

Conformément aux figures 1 et 1A, l'axe 5, d'une longueur correspondant sensiblement à l'encombrement transversal du carter 7, est immobilisé suivant son axe transversal "A" par un élément d'arrêt 1, engagé dans un évidement 9 du boîtier 4 et dans une gorge 8 de l'axe 5 faisant face audit orifice 9.

A cet effet, la gorge 8 est réalisée soit au moment de la mise en forme de l'axe 5, soit ultérieurement par usinage. Cependant, l'évidemment 9 est usiné par perçage dans le boîtier 4 et ne nécessite pas une grande précision sur le positionnement.

Avant le montage, l'élément d'arrêt 1, qui peut être une goupille de type élastique ou serrée, est présenté du côté de l'évidemment 9 réalisé dans le boîtier 4 du différentiel. Puis, il est positionné manuellement par pression jusqu'au fond de la gorge 8, faisant face audit évidemment. L'axe 5 n'a pas besoin d'être indexé angulairement pour engager la goupille.

Ainsi, les tolérances sur le positionnement de l'élément d'arrêt 1 par rapport au boîtier 4 sont relativement larges sans pour autant ajouter de jeu axial dans l'axe 5 de satellite contrairement aux autres solutions de goupillages traditionnelles où les trous de goupille doivent être précisément positionnés par rapport à l'axe de satellite.

Dans l'exemple non limitatif de réalisation de l'invention illustré par la figure 2, l'élément d'arrêt 1 présente deux parties. La première partie 2 possède une largeur correspondant sensiblement à l'encombrement transversal "e1" de l'évidemment 9 et la seconde partie 3 possède une largeur correspondant sensiblement à l'encombrement transversal "e2" de la gorge 8. Selon ce mode de réalisation, la largeur de l'évidemment 9 est plus grande que la largeur de la gorge 8. Par ailleurs, l'élément d'arrêt 1 peut présenter une section longitudinale rectangulaire, dont la largeur correspondra sensiblement à l'encombrement transversal "e1" de l'évidemment 9.

Ce système d'arrêt autorise la rotation de l'axe de satellite 5 sur son axe lors des phases de fonctionnement sévères (patinage ou virage sous fort couple). La goupille 1 sera peu sollicitée, permettant ainsi une forte réduction des risques de grippage et d'usure de l'axe.

Ainsi, conformément à l'invention, un seul élément d'arrêt 1 est suffisant pour bloquer l'axe en translation. Le montage du différentiel de transmission est donc simplifié en réduisant le nombre de pièces et le nombre d'opérations d'usinage et de montage consacrées au maintien de l'axe des satellites vis-à-vis du boîtier.

## Revendications

1. Différentiel de transmission notamment pour automobile comportant une couronne d'entrée de mouvement, solidaire en rotation d'un boîtier de différentiel (4), fermé par un couvercle, et à l'intérieur duquel deux satellites opposés sont montés en rotation sur un même axe (5) transversal reçu dans deux perçages opposés du carter (7), ledit axe est immobilisé axialement vis-à-vis du carter (7) par un élément d'arrêt (1), engagé dans un évidement (9) du boîtier et dans une gorge (8) de l'axe (5) faisant face audit orifice **caractérisé en ce que** l'élément d'arrêt (1) est une goupille et **en ce qu'**il présente deux parties, une première partie (2) possédant une largeur correspondant sensiblement à l'encombrement transversal (e1) de l'évidemment (9) et une seconde partie (3) possédant une largeur correspondant sensiblement à l'encombrement transversal (e2) de la gorge (8).

2. Différentiel de transmission selon la revendication 1, **caractérisé en ce que** l'élément d'arrêt (1) présente une section longitudinale rectangulaire.

## Revendications modifiées

### Revendications modifiées conformément à la règle 86(2) CBE.

**1.** Différentiel de transmission notamment pour automobile comportant une couronne d'entrée de mouvement, solidaire en rotation d'un boîtier de différentiel (4), fermé par un couvercle, et à l'intérieur duquel deux satellites opposés sont montés en rotation sur un même axe (5) transversal reçu dans deux perçages opposés du carter (7), ledit axe étant immobilisé axialement vis-à-vis du carter (7) par une goupille engagée dans un évidement (9) du boîtier et dans une gorge (8) faisant face à celui-ci, **caractérisé en ce que** l'évidement (9) est plus large que la gorge (8) et **en ce que** la goupille (1) présente sur sa longueur deux parties adjacentes dont les largeurs correspondent respectivement à l'encombrement transversal (e2) de la gorge (8) et à l'encombrement (e2) de l'évidement (9).

**2.** Différentiel de transmission selon la revendication 1,
**caractérisé en ce que** l'élément d'arrêt (1) présente une section longitudinale rectangulaire.
